(19) Europäisches Patentamt
European Patent Office
Office européen des brevets

(11) **EP 2 682 800 A1**

(12) **EUROPEAN PATENT APPLICATION**
published in accordance with Art. 153(4) EPC

(43) Date of publication:
**08.01.2014 Bulletin 2014/02**

(21) Application number: **12752435.3**

(22) Date of filing: **27.02.2012**

(51) Int Cl.:
**G02B 21/00** (2006.01)    **G01B 9/04** (2006.01)

(86) International application number:
**PCT/ES2012/070116**

(87) International publication number:
**WO 2012/117139 (07.09.2012 Gazette 2012/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2011 ES 201130259 P**

(71) Applicant: **Universidad De Murcia
30003 Murcia (ES)**

(72) Inventor: **IGLESIAS CASARRUBIOS, Jose, Ignacio
E-30003 Murcia (ES)**

(74) Representative: **Carpintero Lopez, Francisco et al
Herrero & Asociados, S.L.
Alcalá 35
28014 Madrid (ES)**

(54) **METHOD AND SYSTEM FOR PRODUCING QUANTITATIVE IMAGES IN OPTICAL PHASE MICROSCOPY**

(57)    The present invention relates to a method for obtaining images of samples in optical microscopy which allows obtaining images with complete quantitative phase information or optical path difference of microscopic samples (M) by means of generating simultaneous phase gradient images.

The light emerging from the sample, illuminated by a variety of plane waves, is split into four beams using optical or electro-optical means. The image of the sample with the four beams is simultaneously generated on an array sensor. The images are directly related to the gradient. A numerical integration algorithm obtains the phase from the gradient information.

The present invention is particularly useful as a microscopy technique in biology and biomedicine.

FIG. 1

EP 2 682 800 A1

**Description**

<u>Object of the Invention</u>

The present invention relates to a method and system for obtaining images of microscopic objects with quantitative phase information particularly suitable for studying samples of biological interest.

<u>Background of the Invention</u>

If is often impossible or inappropriate to use staining in microscopy. In these cases, the biological media are often transparent, such that they can only be seen through the detection of refractive index variation. When light passes through these media, this spatial index variation is imprinted in the phase of the light electric field. Unfortunately, the phase cannot be directly seen. To solve this difficulty, there are different conventional techniques such as the Zernike microscope or the Nomarski microscope. Commercial microscopes include the possibility of the use thereof, however, the information provided is partial: the presence of structures related to index variations can be detected but not quantified. Subsequently, interferential (holographic) techniques have been proposed (Cuche, E., F. Bevilacqua, et al. (1999). "Digital holography for quantitative phase-contrast imaging." Opt. Lett. 24(5): 291-293; Charrière, F., A. Marian, et al. (2006). "Cell refractive index tomography by digital holographic microscopy." Opt. Lett. 31 (2): 178-180) which provide complete information but involve the use of coherent light, reference beams and require maintaining mechanical stability in the system during recording. Direct phase detection with a sensor based on the lateral displacement technique, Bon, P., G. Maucort, et al. (2009). "Quadriwave lateral shearing interferometry for quantitative phase microscopy of living cells." Opt. Express 17(15): 13080-13094, has instead been proposed but it involves instrumental complexity and has limitations relating to light coherence and obtainable data density.

<u>Description of the Invention</u>

The illumination and data acquisition system in quantitative phase microscopy proposed by the invention solves in a fully satisfactory manner the problem described above in the different mentioned aspects. Particularly: it simplifies the method and provides great data density in an adjustable manner.

To that end, the invention is based on conjugating, by means of a microscope objective and other conventional optical components, the light that has passed through the sample on an intermediate plane where it is split into four parts by means of an optical or electro-optical device. Once split, the light is optically led to an array sensor detecting four images of the sample which are digitally processed, giving rise to a two-dimensional map of the phase change generated by the sample.

The plane where the light beam is divided into four beams is a focal plane or a plane where the Fourier transform of the electric field has been generated.

In a preferred example, the preceding split is produced by means of a refractive optical device consisting of a four-sided pyramid the vertices of which define the spatial location of two X and Y axes, the Z axis corresponding to the optical axis of the entire optical system. Each of the prisms making up the pyramid deflects the light towards its respective opposite bases.

The optics after the beam splitting component conjugates the plane of the sample with a matrix sensor such as a CCD where four simultaneous images are obtained. Such optics can be variable such that it allows modifying the magnifications of the sample on the sensor and therefore sampling of the phase.

Under static conditions, the sensor records signals relating to the local phase gradient of the phase introduced by the sample but with a restricted range of measurement and little gain. To improve gain, it is advantageous to modulate the system.

In an alternative configuration, the modulation is obtained by means of the oscillation of the beam or of the splitter device during image acquisition time, such that the recorded signal is proportional to the gradient, the gain being established through controlling oscillation amplitude. In these conditions, the phase gradient $\left( \dfrac{\partial \Phi}{\partial x}, \dfrac{\partial \Phi}{\partial y} \right)$ is proportional to the signals $(S_x(x,y), S_y(x,y))$ obtained from the four images $I_i(x,y)$ in the sensor by means of the expressions

$$S_x(x,y) = \frac{\left(I_1(x,y) + I_4(x,y)\right) - \left(I_2(x,y) + I_3(x,y)\right)}{\sum_i I_i(x,y)}$$

$$S_y(x,y) = \frac{\left(I_1(x,y) + I_2(x,y)\right) - \left(I_3(x,y) + I_4(x,y)\right)}{\sum_i I_i(x,y)}$$

Finally, the phase is computationally reconstructed from the gradient information with an integration algorithm.

In a preferred alternative configuration, signal modulation is statically obtained by means of illuminating the sample using a symmetrical, planar incoherent light emitting surface of controllable extent as a source. This source is optically led to the plane of the sample such that in view of the incoherence of the source, it can be considered that a plurality of collimated beams with different angles with respect to the optical axis simultaneously pass through the sample, simultaneously generating a plurality of Fourier transforms laterally displaced on the beam splitter element. The extent of the source is responsible for the system gain given that the distance from a point of the source to the optical axis is directly related to the displacement generated on the beam splitter element.

Description of the Drawings

To complement the description that is being made and for the purpose of aiding to better understand the features of the invention according to a preferred practical embodiment thereof, a set of drawings in which the following has been depicted with an illustrative and non-limiting character is attached as an integral part of said description:

Figure 1 schematically shows the general principle of the proposed instrument.
Figure 2 illustrates the method based on the images involved.

Preferred Embodiment of the Invention

In view of the described drawings, it can be seen how the method of the invention is based on using an optical system for conjugating the light emerging through the sample on a detector once the beam has been split preferably by the effect of a pyramidal refractive component in the plane corresponding to the Fourier transform.

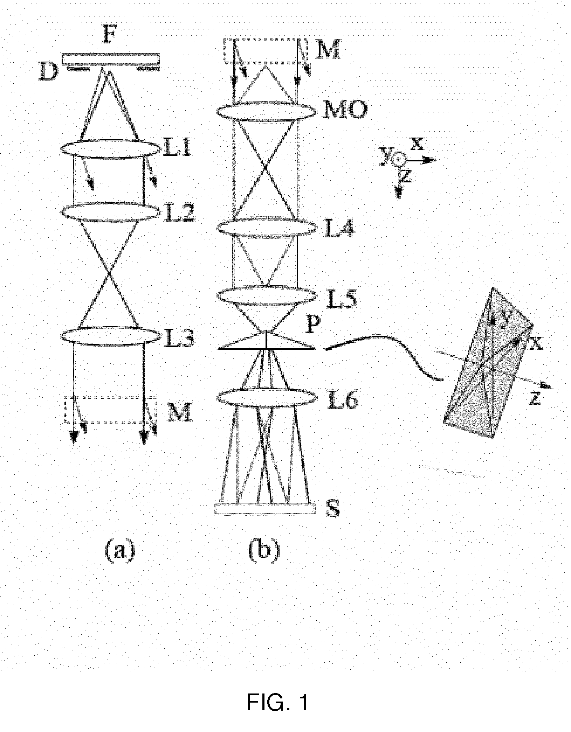

As depicted in Figure 1(a), a sample (M) is illuminated with an incoherent light source consisting of an extensive emitter (F) having a diaphragm (D) coupled thereto for controlling the extent of the source. This diaphragm is located on the focal plane before a lens such that after exiting the lens (L1) the light beam can be considered a superposition of plane waves with various propagation directions distributed symmetrically about the optical axis. The field thus generated after exiting the lens is optically conjugated by means of lenses (L2) and (L3) on the sample (M).

As shown in Figure 1(b), a microscope objective (OM) and a lens (L4) conjugate the light emerging from the sample on a lens (L5). The refractive pyramid (P) is located on the image focal plane of this lens. A lens (L6) is used for conjugating the plane of the sample on an array sensor (S).

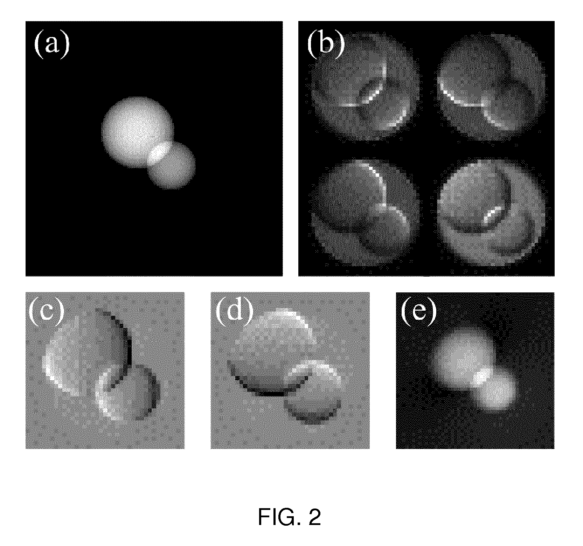

Figure 2(a) shows the phase delay or optical path difference generated by a sample consisting of two transparent microspheres. Figure 2(b) shows the image which would be obtained by the sensor. The images of Figure 2(c) and 2(d) show the gradients in the X and Y directions calculated from the preceding image. Figure 2(e) shows the image corresponding to the phase reconstructed from integrating the information contained in the preceding images.

**Claims**

1. Method for obtaining phase images of samples in optical microscopy, **characterized in that** it comprises the steps of:

- a. illuminating a sample (M) by means of a light beam,
- b. conjugating the light that has passed through the sample in an intermediate plane where the beam is split into four beams by means of an optical or electro-optical splitter device (P), gradient information thus being obtained
- c. optically leading the light beams resulting from the split to an array sensor (S)

- d. applying a numerical integration algorithm for obtaining the phase from the recorded gradient information

2. Method according to claim 1, **characterized in that** the signal is modulated before illuminating the sample by means of using an incoherent light source of controllable extent with a planar emission surface.

3. Method according to claim 1, **characterized in that** the signal is modulated by means of the oscillation of the beam after passing through the sample (M).

4. Method according to claim 1, **characterized in that** the signal is modulated by means of the oscillation of the splitter device (P).

5. Method according to any of the preceding claims, **characterized in that** the beam splitter is a four-sided pyramid.

6. Phase microscopy system for carrying out the method of claim 5, **characterized in that** it comprises an incoherent light emitting source (F), with an extendable planar emission surface, optical means for transmitting the light through a plane of sample (M), an array sensor (S), a four-sided pyramid located on a plane between the sample and the sensor (S) to separate the beam into four beams, thus obtaining gradient information and programming means for applying a numerical integration algorithm for obtaining the phase from the gradient information.

FIG. 1

FIG. 2

# INTERNATIONAL SEARCH REPORT

| International application No. |
| --- |
| PCT/ES2012/070116 |

**A. CLASSIFICATION OF SUBJECT MATTER**

*G02B21/00* (2006.01)
*G01B9/04* (2006.01)
According to International Patent Classification (IPC) or to both national classification and IPC

**B. FIELDS SEARCHED**

Minimum documentation searched (classification system followed by classification symbols)
G02B, G01B

Documentation searched other than minimum documentation to the extent that such documents are included in the fields searched

Electronic data base consulted during the international search (name of data base and, where practicable, search terms used)

EPODOC, INVENES, WPI, INSPEC

**C. DOCUMENTS CONSIDERED TO BE RELEVANT**

| Category* | Citation of document, with indication, where appropriate, of the relevant passages | Relevant to claim No. |
| --- | --- | --- |
| A | CN 101893755 A (XI AN OPTICS PRECISION MECH) 24.11.2010, the whole document. | 1, 2, 5, 6 |
| A | US 4200353 A (HOFFMAN, R.) 29.04.1980, abstract; column 1, line 62 - column 2, line 30; column 2, line 58 - column 4, line 35; figures 1, 2, 2A. | 1-6 |
| A | US 2009/0135486 A1 (MCNULTY, I.) 28.05.2009, the whole document. | 1, 2, 5, 6 |
| A | WO 95/29420 A1 (DODT, H.) 02.11.1995, the whole document. | 1-6 |
| A | US 4200345 A (HOFFMAN, R.) 29.04.1980, the whole document. | 1-6 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 11/06/2012 | **(12/06/2012)** |

| Name and mailing address of the ISA/ | Authorized officer |
| --- | --- |
| | Ó. González Peñalba |
| OFICINA ESPAÑOLA DE PATENTES Y MARCAS Paseo de la Castellana, 75 - 28071 Madrid (España) Facsimile No.: 91 349 53 04 | Telephone No. 91 3495475 |

Form PCT/ISA/210 (second sheet) (July 2009)

## INTERNATIONAL SEARCH REPORT

| International application No. |
| --- |
| PCT/ES2012/070116 |

| C (continuation). | DOCUMENTS CONSIDERED TO BE RELEVANT | |
| --- | --- | --- |
| Category * | Citation of documents, with indication, where appropriate, of the relevant passages | Relevant to claim No. |
| A | US 4577940 A  (KRASINSKI, J. ET AL.) 25.03.1986. | - |
| A | JP 11119107 A  (OLYMPUS OPTICAL CO.) 30.04.1999. | - |

Form PCT/ISA/210 (continuation of second sheet) (July 2009)

## INTERNATIONAL SEARCH REPORT

Information on patent family members

International application No.

PCT/ES2012/070116

| Patent document cited in the search report | Publication date | Patent family member(s) | Publication date |
|---|---|---|---|
| CN101893755 A | 24.11.2010 | NONE | |
| US4200353 A | 29.04.1980 | DE2523463 A | 18.12.1975 |
| | | FR2274054 A | 02.01.1976 |
| | | JP51128548 A | 09.11.1976 |
| | | DD124129 A | 02.02.1977 |
| | | CH586911 A | 15.04.1977 |
| | | CA1028878 A | 04.04.1978 |
| | | GB1509276 A | 04.05.1978 |
| | | IT1036796 B | 30.10.1979 |
| US2009135486 A | 28.05.2009 | US7864415 B | 04.01.2011 |
| WO9529420 A | 02.11.1995 | DE9406545 U | 03.11.1994 |
| | | DE19514358 AC | 01.02.1996 |
| | | EP0705451 A | 10.04.1996 |
| | | EP19950915797 | 18.04.1995 |
| | | JPH09501780 A | 18.02.1997 |
| US4200354 A | 29.04.1980 | DE2523464 A | 18.03.1976 |
| | | FR2284126 AB | 02.04.1976 |
| | | GB1502657 A | 01.03.1978 |
| | | CA1031199 A | 16.05.1978 |
| US4577940 A | 25.03.1986 | NONE | |
| JP11119107 A | 30.04.1999 | NONE | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CUCHE, E., F. BEVILACQUA et al.** Digital holography for quantitative phase-contrast imaging. *Opt. Lett.,* 1999, vol. 24 (5), 291-293
- **CHARRIÈRE, F. ; A. MARIAN et al.** Cell refractive index tomography by digital holographic microscopy. *Opt. Lett.,* 2006, vol. 31 (2), 178-180
- **BON, P. ; G. MAUCORT et al.** Quadriwave lateral shearing interferometry for quantitative phase microscopy of living cells. *Opt. Express,* 2009, vol. 17 (15), 13080-13094